**Europäisches Patentamt**

**European Patent Office**

**Office européen des brevets**

(19)

(11) Numéro de publication: **0 100 723**
**B1**

(12) ## FASCICULE DE BREVET EUROPEEN

(45) Date de publication du fascicule du brevet:
**25.09.85**

(51) Int. Cl.⁴: **A 01 C 7/04**

(21) Numéro de dépôt: **83401536.4**

(22) Date de dépôt: **26.07.83**

(54) **Semoir polyvalent.**

(30) Priorité: **29.07.82 FR 8213270**

(43) Date de publication de la demande:
**15.02.84 Bulletin 84/7**

(45) Mention de la délivrance du brevet:
**25.09.85 Bulletin 85/39**

(84) Etats contractants désignés:
**AT BE CH DE FR GB IT LI LU NL SE**

(56) Documents cités:
**EP - A - 0 050 829**
**FR - A - 2 323 308**
**FR - A - 2 389 316**

(73) Titulaire: **LACAILLE S.A., Société Anonyme dite:, Conan, F-41290 Oucques (FR)**

(72) Inventeur: **Lacaille, Christian, Le Hameau du Val de Cisse, F-41330 Fosse (FR)**

(74) Mandataire: **Bonnetat, Christian et al, Cabinet PROPI Conseils 23 rue de Léningrad, F-75008 Paris (FR)**

ACTORUM AG

## Description

La présente invention a pour objet un semoir pouvant être utilisé aussi bien pour l'ensemencement de grandes surfaces de culture que de micro-parcelles de semis d'expérimentation. On sait que, dans le cas des semis d'expérimentation, on doit semer successivement, sur des micro-parcelles de terre, des lignes de graines de variétés différentes avec, entre elles, une allée de séparation, sans mélange ni manque de graines d'une micro-parcelle à l'autre et avec une grande précision.

Un tel semis d'expérimentation peut être réalisé après traçage au sol de lignes de repérage des différentes micro-parcelles ou par un câble sur lequel sont repérés des changements de micro-parcelles, ou encore, par un système de programmation qui, suivant les cas, est commandé par un système mécanique, électrique ou électronique.

Par ailleurs, on connaît déjà des semoirs pneumatiques. Cependant, à cause des particularités des semis d'expérimentation, il n'est pas possible d'utiliser, sans le modifier, un semoir pneumatique conçu d'origine pour semer régulièrement, jusqu'à 12 rangs à la fois, une même variété, sans s'arrêter, sur plusieurs hectares.

On connaît déjà, notamment par les documents FR-A- Nos 2323308 et 2389316 des semoirs équipés de systèmes d'approvisionnement et de récupération des graines spécialement adaptés au semis de micro-parcelles; cependant, ces semoirs connus comportent des commandes mécaniques très complexes entraînant des risques d'erreurs et, ainsi équipés, ils ne peuvent plus semer de grandes parcelles.

En outre, par le document EP-A N° 0050829, on connaît déjà un semoir pneumatique pourvu d'un dispositif de récupération par dépression des graines excédentaires. Ce semoir comporte au moins un élément semeur du type comprenant un disque semeur vertical, perforé à sa périphérie et tournant à l'intérieur d'une enceinte qu'il partage en deux compartiments dont l'un constitue une réserve de graines à semer et l'autre est relié à une source d'aspiration, de sorte que lesdites graines sont prélevées par aspiration une à une par les perforations du disque pour être transportées à un emplacement hors aspiration de la course du disque où elles sont libérées en vue du semis, et le dispositif de récupération par dépression, qui est relié audit compartiment constituant la réserve de graines à semer, comprend un réservoir de réception des graines excédentaires susceptible d'être mis en dépression et, d'une part, deux trappes mobiles, dont l'une est interposée entre une trémie d'approvisionnement en graines et ledit compartiment constituant réserve de graines et l'autre sert à ouvrir ou fermer un circuit d'extraction des graines et, d'autre part, une troisième trappe mobile permettant de couper au moins partiellement la dépression sur le disque perforé.

Dans ce semoir connu, la canalisation d'extraction des graines excédentaires est reliée à la partie supérieure du compartiment constituant la réserve de graines à semer et la troisième trappe mobile est nécessaire pour permettre l'aspiration desdites graines excédentaires. Toutefois, cette disposition ne peut assurer avec certitude que toutes les graines excédentaires sont aspirées, puisque celles-ci doivent s'élever jusqu'à la canalisation d'extraction. Par ailleurs, une telle aspiration par le haut nécessite une dépression relativement élevée, de sorte qu'il est nécessaire d'associer un cyclone à chaque élément semeur. Il résulte de plus de cette dépression élevée des difficultés d'étanchéité dans le circuit pneumatique, avec des risques de fuites et de mélange de graines.

La présente invention vise à remédier à ces inconvénients et a pour objet la conception d'un équipement à commande simplifiée sur un élément semeur automatisant les semis effectués par des semoirs de type pneumatique.

Cet équipement permet en particulier:

— le semis régulier de la quantité nécessaire de graines de chaque variété,
— la récupération rapide de graines excédentaires en fin de parcelles sans les laisser au sol,
— le rechargement du disque avec la variété suivante, sans mélange,
— la possibilité de laisser un espace ou allée entre chaque micro-parcelle,
— l'utilisation du semoir pour semer des grandes parcelles sans modification.

A cette fin, selon l'invention, le semoir polyvalent pouvant être utilisé aussi bien pour l'enxemble de grandes surfaces de culture que de micro-parcelles de semis d'expérimentation et comportant un châssis mobile sur lequel est monté au moins un élément semeur du type comprenant un disque semeur vertical, perforé à sa périphérie et tournant à l'intérieur d'une enceinte qu'il partage en deux compartiments, dont l'un constitue une réserve de graines à semer et l'autre est relié à une source d'aspiration, de sorte que lesdites graines sont prélevées par aspiration une à une par les perforations du disque pour être transportées à un emplacement hors aspiration de la course dudit disque où elles sont libérées en vue du semis, ledit semoir comportant un dispositif de récupération par dépression de graines excédentaires comprenant un réservoir de réception des graines excédentaires susceptible d'être mis en dépression et relié par une canalisation d'extraction audit compartiment constituant la réserve de graines à semer et comprenant en outre deux trappes mobiles, dont l'une est interposée entre une trémie d'approvisionnement en graines et ledit compartiment constituant réserve de graines et sert à ouvrir ou fermer ladite trémie d'approvisionnement, est caractérisé en ce que l'autre trappe mobile sert à ouvrir ou fermer ladite canalisation d'extraction des graines, et en ce que cette canalisation d'extraction relie audit réservoir la partie inférieure de celui desdits compartiments formant réserve de graines.

Aussi, grâce à l'invention, il est possible d'aspirer, avec une dépression raisonnable, dans ledit réservoir toutes les graines excédentaires restant dans le compartiment de réserve, à la fin de l'ensemencement d'une micro-parcelle et avant le commencement de l'ensemencement de la micro-parcelle suivante.

De préférence, ladite trappe mobile est agencée à la partie inférieure dudit compartiment faisant réserve de graines, alors que le réservoir de réception des graines excédentaires est mis en dépression par la source d'aspiration associée au disque perforé.

Afin de pouvoir aspirer les graines excédentaires vers le réservoir avant l'expiration de l'ensemencement de la micro-parcelle en cours de semis, il est avantageux de prévoir un disque à nombre de perforations relativement petit, mais tournant à grande vitesse. Ainsi, il est possible d'aspirer les graines excédentaires avant la fin de l'ensemencement, les graines prélevées par le disque à un instant antérieur restant dans leur perforation à cause de la dépression.

De préférence, lorsque, de façon connue, le semoir comporte une pluralité d'éléments semeurs, chacun associé à une ligne d'ensemencement, il est avantageux de prévoir un réservoir unique pour aspirer les graines excédentaires des différents éléments semeurs.

Les figures du dessin annexé feront bien comprendre comment l'invention peut être réalisée.

La fig. 1 donne le schéma de petites parcelles de semis expérimental que peut ensemencer le semoir selon l'invention.

La fig. 2 est une vue schématique, partiellement en coupe, d'un élément semeur avec son équipement selon l'invention, représenté perpendiculairement au plan du disque semeur.

La fig. 3 est une vue schématique agrandie selon la ligne III-III de la fig. 2.

La fig. 4 illustre schématiquement le fonctionnement du dispositif selon l'invention.

La fig. 5 est une vue schématique latérale en coupe du dispositif selon l'invention.

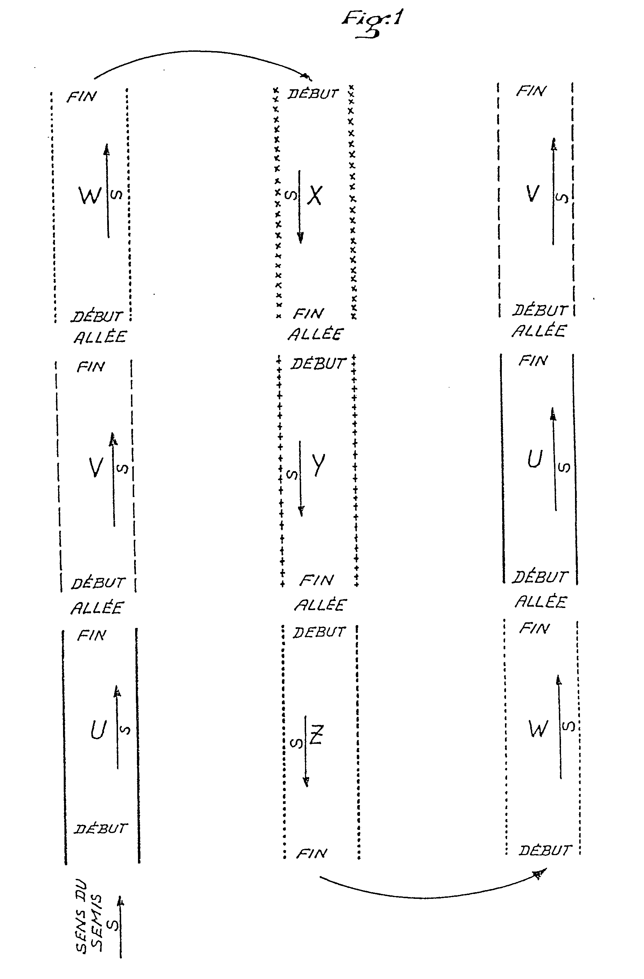

Sur la fig. 1, on a représenté schématiquement un semis expérimental sur deux rangs, en vue de dessus. Chaque micro-parcelle est ensemencée d'une variété de graines spécifique et est représentée dans le sens du semis S par les lettres U-V-W, X-Y-Z, W-U-V. Chaque micro-parcelle est séparée de la suivante par une allée. La variété de graines est changée à chaque micro-parcelle de façon que chacune soit ensemencée d'une variété différente de la précédente, ou de celle d'à côté.

Par exemple, la longueur des micro-parcelles est de 4 à 12 m, celle des allées de 0,40 à 1 m. L'espacement entre les deux rangs peut être de 0,60 à 0,80 m.

Il apparaît clairement que pour réaliser sur un champ des semis de ce type, il est nécessaire de prévoir un équipement sur le semoir pneumatique pour qu'il lui soit adapté. En effet, il est notamment nécessaire que chaque rang de chaque micro-parcelle reçoive le nombre de petites graines qu'il doit comprendre et que les graines excédentaires d'une micro-parcelle soient éliminées avant le début du semis de la micro-parcelle suivante, puisque celle-ci doit être ensemencée avec des graines différentes.

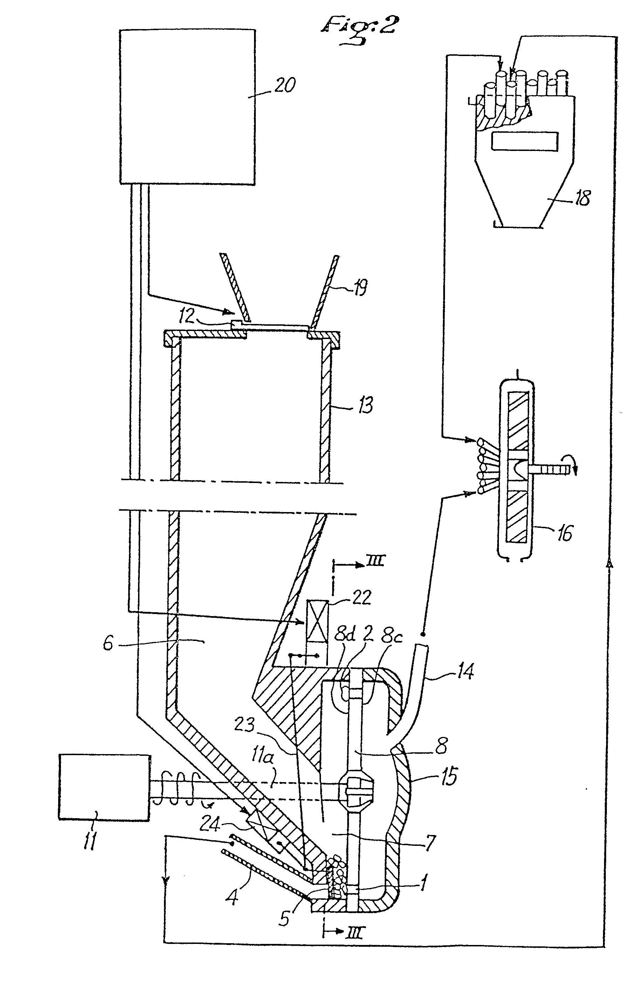

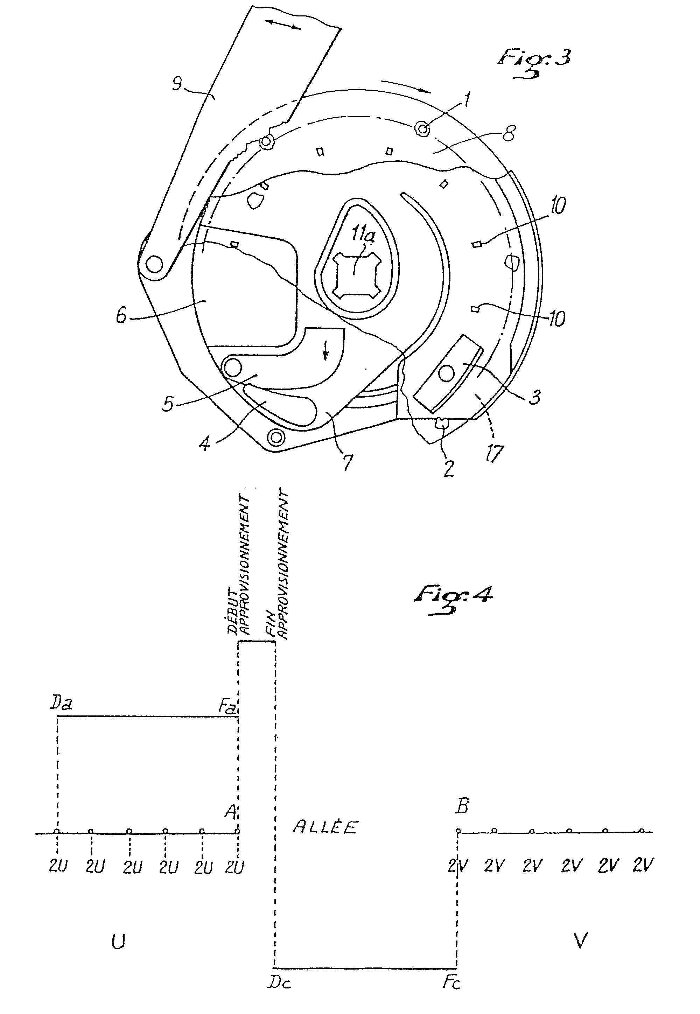

Comme le montrent les fig. 2 et 3, un élément semeur de semoir pneumatique connu comprend essentiellement un disque semeur rotatif 8 de faible épaisseur, tournant dans son plan vertical et comportant les perforations 1 sur son pourtour. Le diamètre et le nombre de perforations sont différents suivant les espèces de graines à semer. Le mouvement de rotation du disque 8 est communiqué par les roues porteuses du semoir, au moyen de l'arbre 11a d'une transmission appropriée et réglable 11. La face 8c du disque 8 est soumise à une dépression sur environ les 8/10 de sa surface par une turbine 16 de l'appareil. La face opposée 8d est, sur une partie, en contact avec des graines 2 qui se trouvent dans une chambre d'alimentation 7 et qui proviennent, sous l'action de la gravité, d'une trémie d'approvisionnement 19 en passant par un canal 6. Les graines 2, par aspiration, sont collées à chaque perforation 1, un dispositif de sélection 9 permettant de ne conserver qu'une seule graine. Le disque 8 a des ergots 10 (non représentés sur la fig. 2) servant à agiter les graines dans le fond de la chambre d'alimentation 7 pour éviter le tassement desdites graines produit par le roulement du semoir sur le terrain. Le disque 8, dans sa rotation, transporte dans sa trajectoire circulaire les graines 2 jusqu'à une zone 17 hors dépression (visible uniquement sur la fig. 3) où elles sont libérées puis semées par un soc au sol (non représenté). La face 8c du disque 8 est recouverte par un carter d'aspiration 15, relié par une tuyauterie 14 à la turbine de l'appareil 16 qui produit la dépression.

Les graines arrivant par le canal 6 en provenance d'une trémie 13, sont stockées dans la chambre d'alimentation 7 pour être prélevées par le système d'aspiration par ledit disque semeur 8.

Conformément à la présente invention, une trappe mobile 5 est agencée à la partie inférieure de la chambre d'alimentation 7 et commande l'accès d'une canalisation d'extraction 4, reliée à un réservoir 18 de réception des graines excédentaires mis sous dépression par la turbine 16.

Par ailleurs, la trémie 13 est obturée à sa partie supérieure par une seconde trappe 12 servant de fond à une trémie d'approvisionnement 19.

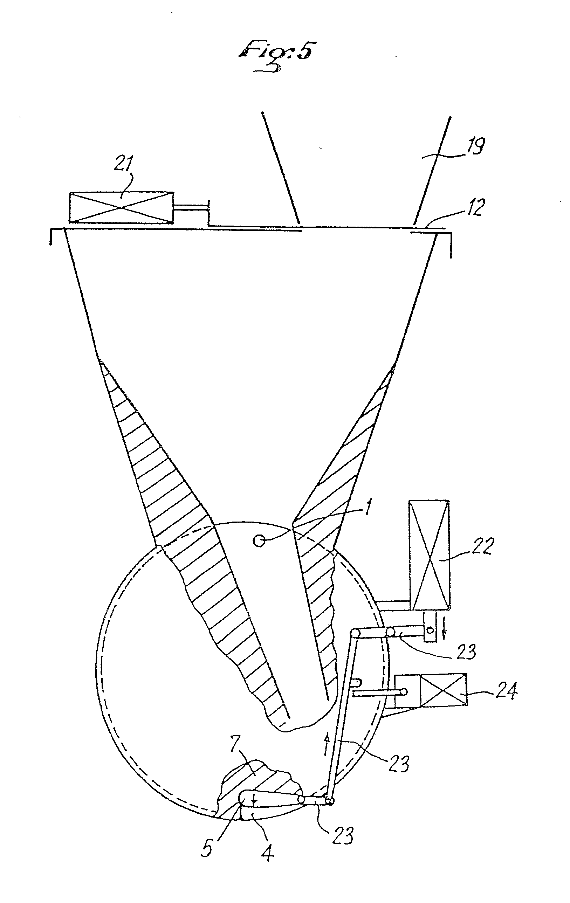

Le fonctionnement du dispositif selon l'invention, montré par les fig. 2 et 3, est expliqué ci-après en regard des figures supplémentaires 4 et 5, la fig. 4 étant une représentation schématique horizontale des parcelles U et V de la fig. 1.

Dès le début de l'aspiration Da, avant la fin du semis de la micro-parcelle, il y a aspiration des graines 2U excédentaires, par l'ouverture de la trappe 5 dans la chambre d'alimentation 7. Les graines 2U de la variété U qui, pendant cette opération, se trouvaient collées par aspiration sur le disque 8 terminent le semis sur la micro-parcelle U jusqu'à la fin A, où intervient la fin de l'aspiration Fa à l'intérieur de ladite chambre d'alimentation 7 par la fermeture de la trappe 5.

Au début de l'allée, doit intervenir l'approvisionnement de l'élément semeur en graines 2V de la variété V.

Le chargement du disque par les graines 2V s'effectue alors suivant le processus décrit en regard de la fig. 3. Entre le début du chargement Dc et la fin du chargement Fc, s'écoule le temps nécessaire à la traversée de l'allée.

Dès la fin du chargement Fc les graines 2V sont prêtes à être semées en début B de parcelle V.

Conformément à l'invention, avant la fin de la parcelle U, la trappe 5 s'ouvre, pendant un temps commandé par un système de commande électrique 20, sous l'action d'un électro-aimant de commande de trappe 22, et de leviers 23, pour aspirer les graines excédentaires 2U, restant dans la chambre 7, par la tuyauterie 4, pour les stocker ensuite dans le réservoir 18 de réception, récupérant ainsi les graines excédentaires de un ou plusieurs éléments semeurs. Pendant ce temps, le plateau semeur 8 de 6 ou 8 alvéoles, tourne à vitesse élevée, entraîné par un multiplicateur 11, ce qui permet le semis des graines 2 restant sur le disque 8. Dès la fermeture complète de la trappe 5 assistée par un contacteur de sécurité 24 et avant la traversée de l'allée (voir la fig. 4) séparant les micro-parcelles, s'effectue l'ouverture de la trappe 12 qui est commandée par l'électro-aimant 21 asservi par l'armoire électrique 20, ce qui permet le remplissage de la chambre d'alimentation 7 par les graines 2V préparées dans la trémie d'approvisionnement 19 et passant par le canal d'approvisionnement 6 : le cycle recommence pour la nouvelle parcelle.

Lorsque le semoir comporte une pluralité d'éléments semeurs, les opérations décrites ci-dessus s'appliquent simultanément à chaque élément semeur afin de réaliser des parcelles de un ou plusieurs rangs.

Quoique l'on ait représenté un réservoir de réception unique 18 pour toutes les graines excédentaires réaspirées, il va de soi qu'il est possible d'utiliser un réservoir 18 de réception compartimenté permettant de séparer les différentes espèces de graines utilisées. Par exemple, le réservoir 18 de réception peut comporter autant de godets que de micro-parcelles à ensemencer, un système automatique provoquant l'avance desdits godets pour qu'ils reçoivent chacun à leur tour les graines excédentaires.

## Revendications

1. Semoir polyvalent pouvant être utilisé aussi bien pour l'ensemencement de grandes surfaces de culture que de micro-parcelles de semis d'expérimentation et comportant un châssis mobile sur lequel est monté au moins un élément semeur du type comprenant un disque semeur vertical (8), perforé à sa périphérie et tournant à l'intérieur d'une enceinte qu'il partage en deux compartiments dont l'un (7) constitue une réserve de graines à semer et l'autre (15) est relié à une source d'aspiration (16), de sorte que lesdites graines sont prélevées par aspiration une à une par les perforations (1) du disque (8) pour être transportées à un emplacement hors aspiration de la course du disque (8) où elles sont libérées en vue du semis, ledit semoir comportant un dispositif de récupération par dépression de graines excédentaires comprenant un réservoir (18) de réception des graines excédentaires susceptible d'être mis en dépression et relié par une canalisation d'extraction (4) audit compartiment (7) constituant la réserve de graines à semer et comprenant en outre deux trappes mobiles (5, 12), dont l'une (12) est interposée entre une trémie d'approvisionnement (19) en graines et ledit compartiment (7) constituant réserve de graines et sert à ouvrir ou fermer ladite trémie d'approvisionnement (19), caractérisé en ce que l'autre trappe mobile (5) sert à ouvrir ou fermer ladite canalisation d'extraction (4) des graines, et en ce que cette canalisation d'extraction (4) relie audit réservoir (18) de réception des graines excédentaires, la partie inférieure de celui desdits compartiments (7) formant réserve de graines.

2. Semoir selon la revendication 1, caractérisé en ce que la trappe mobile (5) est agencée à la partie inférieure dudit compartiment (7) formant réserve de graines à semer.

3. Semoir selon l'une des revendications 1 ou 2, caractérisé en ce que le réservoir de réception (18) des graines excédentaires est mis en dépression par la source d'aspiration (16) associée au disque perforé (8).

4. Semoir selon l'une des revendications 1 à 3, caractérisé en ce que le disque semeur (8) comporte relativement peu de perforations (1), mais tourne à vitesse élevée.

5. Semoir selon l'une des revendications 1 à 4, comportant une pluralité d'éléments semeurs, chacun associé à une ligne d'ensemencement, caractérisé en ce qu'il comporte un réservoir de réception unique (18) pour aspirer les graines excédentaires des différents éléments semeurs.

## Claims

1. Polyvalent sowing machine adapted to be used both for seeding large surfaces for corps and micro-plots of plantations for experimentation and comprising a mobile frame on which is mounted at least one sowing element of the type comprising a vertical sowing disc (8), perforated on its periphery and rotating inside an enclosure which it divides into two compartments of which one (7) constitutes a reserves of seeds to be sown and the other (15) is connected to a source of suction (16), so that said seeds are taken by suction one by one through the perforations (1) of the disc (8) to be transported to a location away from suction of the stroke of the disc (8) where they are released with a view to be sown, said sowing machine comprising a device for recovery by depression of excess seeds comprising a reservoir (18) for receiving the excess seeds capable of being placed in vacuo and connected by an extraction pipe (4) to said compartment (7) constituting the reserve of seeds to be sown and further comprising two mobile trap doors (5, 12) of which one (12) is interposed between a seed supply hopper (19) and said compartment (7) constituting reserve of seeds and serves to open or close said supply hopper (19), characterized in that the other mobile trap door (5) serves to open or close said seed extraction pipe (4) and in that this extraction pipe (4) connects to said reservoir (18) for receiving the excess seeds the lower part of that of said compartments (7) forming seed reserve.

2. Sowing machine according to Claim 1, characterized in that the mobile trap door (5) is arranged in the lower part of said compartment (7) forming reserve of seeds to be sown.

3. Sowing machine according to either one of Claims 1 or 2, characterized in that the reservoir (18) for receiving the excess seeds is placed in vacuo by the suction source (16) associated with the perforated disc (8).

4. Sowing machine according to any one of Claims 1 to 3, characterized in that the sowing disc (8) comprises relatively few perforations (1), but rotates at high speed.

5. Sowing machine according to any one of Claims 1 to 4, comprising a plurality of sowing elements, each associated with a line of seeding, characterized in that it comprises a single receiving reservoir (18) for sucking the excess seeds from the different sowing elements.

## Patentansprüche

1. Vielfältig einsetzbare Sämaschine zum Säen sowohl von grossen Anbauflächen als auch Kleinstparzellen für Versuchszwecke, bestehend aus einem beweglichen Rahmen, auf dem zumindest eine Säeinrichtung mit einer senkrechten Säscheibe (8) angeorndet ist, die auf ihrem Umfang Löchungen aufweist und im Inneren einer Einfassung in Drehungen versetzt wird, durch die sie in zwei Abteile unterteilt wird, von denen eines eine Reserve der auszusäenden Saatkörner darstellt und das andere (15) derart mit einer Ansaugquelle (16) verbunden ist, dass die Saatkörner durch die Saugwirkung einzeln von den Löchungen (1) der Scheibe (8) erfasst werden, um an eine Stelle befördert zu werden, an der es im Lauf der Scheibe (8) keine Saugwirkung gibt, wo sie der Säeinrichtung gegenüberliegend freigegeben werden, wobei die Sämaschine eine Unterdruckrückspeisungsvorrichtung für überschüssige Saatkörner besitzt, die ein Reservoir (8) zur Aufnahme von überschüssigen Saatkörnern, das mit Unterdruck beaufschlagt werden kann und über eine Abzugsleitung (4) mit dem die auszusäende Saatkörnerreserve bildenden Abteil verbunden ist und darüber hinaus zwei bewegliche Verschlüsse (5, 12) aufweist, von denen einer (12) zwischen einem saatkörnerversorgungstrichter (19) liegt und das Abteil (7) eine Saatkörnerreserve darstellt und dazu dient, den Versorgungstrichter (19) zu öffnen und zu schliessen, dadurch gekennzeichnet, dass der andere bewegliche Verschluss (5) dazu dient, die Saatkorn-Abzugsleitung (4) zu öffnen oder zu schliessen und den unteren Teil des die Saatkörnerreserve bildenden Abteil (7) mit dem überschüssige Saatkörner aufnehmenden Reservoir (18) zu verbinden.

2. Sämaschine nach Anspruch 1, dadurch gekennzeichnet, dass der bewegliche Verschluss (5) am unteren Teil des die Reserve der auszusäenden Saatkörner bildenden Abteils (7) angeordnet ist.

3. Sämaschine nach einem der Ansprüche 1 oder 2, dadurch gekennzeichnet, dass das Reservoir (18) zur Aufnahme der überschüssigen Saatkörner von der der Lochscheibe (8) zugeordneten Ansaugquelle (16) mit Unterdruck beaufschlagt wird.

4. Sämaschine nach einem der Ansprüche 1 bis 3, dadurch gekennzeichnet, dass die Scheibe (8) eine verhältnismässig geringe Anzahl von Löchungen (1) aufweist und dass sie mit einer erhöhten Geschwindigkeit umläuft.

5. Sämaschine nach einem der Ansprüche 1 bis 4 mit mehreren Säeinrichtungen, von denen jede einer Aussaatlinie zugeordnet ist, dadurch gekennzeichnet, dass sie ein einziges Aufnahmereservoir (18) aufweist, um die überschüssigen Saatkörner der verschiedenen Säeinrichtungen durch Saugwirkung aufzunehmen.

Fig.1

FIN | | DÉBUT | | FIN

W | S | | S | X | | V | S

DÉBUT | | FIN | | DÉBUT
ALLÉE | | ALLÉE | | ALLÉE

FIN | | DÉBUT | | FIN

V | S | | S | Y | | U | S

DÉBUT | | FIN | | DÉBUT
ALLÉE | | ALLÉE | | ALLÉE

FIN | | DEBUT | | FIN

U | S | | S | N | | W | S

DÉBUT | | FIN | | DÉBUT

SENS DU SEMIS
S

*Fig.2*

*Fig:3*

*Fig:4*

DÉBUT APPROVISIONNEMENT

FIN APPROVISIONNEMENT

Da

Fa

A

ALLÉE

B

2U  2U  2U  2U  2U  2U

2V  2V  2V  2V  2V  2V

U

V

Dc

Fc

*Fig.5*